# EUROPEAN PATENT APPLICATION

(11) **EP 4 579 513 A1**
(43) Date of publication of application: **02.07.2025**
(21) Application number: 24213477.3
(22) Date of filing: 18.11.2024
(51) Int. Cl.: G06F 30/327, G06F 30/34, G06F 30/392, G06F 30/343, G06F 119/12, H03K 19/17728

(54) **FPGA COMPILER FLOW FOR HETEROGENEOUS PROGRAMMABLE LOGIC ELEMENTS**

(30) Priority: 29.12.2023 US 202318401026
(71) Applicant: Altera Corporation, San Jose, CA 95134 (US)
(72) Inventor: van Antwerpen, Babette, Mountain View CA, 94040 (US); Au, Anthea, Concord ON, L4K0M7 (CA); Quadros, Selvin, San Jose CA, 95126 (US); Iyer, Mahesh A., Fremont CA, 94539 (US); Zgheib, Grace, San Jose CA, 95134 (US)
(74) Representative: Samson & Partner Patentanwälte mbB

(57) **Abstract**

Embodiments herein are directed to systems and techniques for supporting heterogeneous logic architecture in programmable devices, such as field-programmable gate arrays (FPGAs). heterogeneous logic architectures may include additional logic elements (e.g., AND-inverter cones (AICs)) in addition to lookup tables (LUTs). Accordingly, it may be desirable to provide a compiler flow that supports heterogeneous FPGA architecture, taking advantage of a combination of LUTs and other logic elements (e.g., AICs) to improve resource utilization (e.g., die area, wire length) and improve maximum clock frequency and compile time.

## Description

### BACKGROUND

The present disclosure relates generally to programmable logic devices. More particular, the present disclosure relates to improving resource utilization for heterogeneous field programmable gate arrays (FPGAs).

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Programmable logic devices, a class of integrated circuits, may be programmed to perform a wide variety of operations. Some programmable devices (e.g., FPGAs) may include a heterogeneous architecture, and as such may include a heterogeneous combination of logic elements such as lookup tables (LUTs) and additional logic elements, such as AND-inverter cones, or any other appropriate logic element. A challenge that may arise in heterogeneous FPGA architectures is that combinational logic in a user design may be mapped to each of the different types of logic element. However, each chip may include limited numbers of each type of available logic element. In some instances, the combinational logic may be mapped to the different types of logic elements in an inefficient or suboptimal manner, which may result in excess die-area consumed, lower maximum clock frequency (fmax), and increased wire length.

### BRIEF DESCRIPTION OF THE DRAWINGS

Various aspects of this disclosure may be better understood upon reading the following detailed description and upon reference to the drawings in which:
FIG. 1 is a block diagram of a system used to program an integrated circuit device, in accordance with an embodiment of the present disclosure;
FIG. 2 is a block diagram of the integrated circuit device of FIG. 1, in accordance with an embodiment of the present disclosure;
FIG. 3 is an illustration of an FPGA compiler flow 200 that may support heterogeneous FPGA architectures, in accordance with an embodiment of the present disclosure;
FIG. 4 illustrates multiple types of logic that may be implemented in a heterogeneous FPGA architecture, in accordance with an embodiment of the present disclosure;
FIG. 5 illustrates LUT logic that may only be implemented as a LUT, in accordance with an embodiment of the present disclosure;
FIG. 6 illustrates AIC logic that may only be implemented as an AIC, in accordance with an embodiment of the present disclosure;
FIG. 7 illustrates candidate AIC logic that can be implemented as either LUT or AIC, in accordance with an embodiment of the present disclosure;
FIG. 8 is a flowchart of an example method for performing the synthesis portion of the compiler flow of FIG. 3 in a heterogeneous FPGA architecture, in accordance with an embodiment of the present disclosure;
FIG. 9 is a flowchart of an example method for performing the placing and routing portion of the compiler flow of FIG. 3 in a heterogeneous FPGA architecture, in accordance with an embodiment of the present disclosure;
FIG. 10 illustrates a heterogenous cluster architecture and a homogeneous cluster architecture in which the compiler flow of FIG. 3 may implement logic, in accordance with an embodiment of the present disclosure; and
FIG. 11 is an integrated circuit system on which the compiler flow of FIG. 3 may be carried out, in accordance with an embodiment of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The present disclosure describes systems and techniques related to a compiler flow that supports heterogeneous field-programmable gate array (FPGA) architecture. In certain heterogeneous FPGA architectures, logic array blocks (LABs) may include logic elements such as lookup tables (LUTs) in addition to other programmable logic elements, such as AND-inverter cones (AICs). A benefit of programmable logic elements such as AICs is that an AIC may implement wider functions than LUTs. For example, AICs may have 16 inputs, 32 inputs, or greater.

The additional logic elements may share their inputs and outputs with other logic in a block. An advantage of the additional programmable logic element is that some of the combination logic in a design that would otherwise be mapped to LUTs may now be mapped to these additional logic elements. This allows for a more area-efficient use of the FPGA by implementing fewer LABs, which may consume excessive on-die area. Additionally, using the additional programmable logic may improve logic utilization and wire usage of the design as well as improving routing and timing closure.

A challenge associated with the heterogeneous FPGA architecture stems from the fact that combinational logic in a user design may be mapped to any type of logic element on a chip, but in each area of the chip there is a limited number of each type of logic element available. Moreover, not every function may be mapped to both LUTs and AICs. Consequently, during physical synthesis the combinational logic may not be mapped to corresponding logic elements in an efficient or optimal manner for each given logic element type.

For example, in an architecture where each LAB includes 80% LUTs and 20% AICs, it is possible that a synthesis tool may not map all the logic efficiently. For example, all logic may be mapped to LUTs if it would be the most efficient implementation for each logic cone. Yet while it may be the most efficient implementation viewed individually, in a placed design, there may be wasted AIC logic between the LUTs and the design maps to a larger area on the chip than may be desired. This results in an area-inefficient mapping and may decrease a maximum clock frequency (fmax) and increase wire length. Moreover, even if the physical synthesis would map 80% of the design's combinational logic to LUTs and 20% of the combinational logic to AICs, this may result in an undesirable placement as each part of the chip has the same ratio of LUTs and AICs, leading to an excess number of LUTs in one area and an excess number of AICs in another area. This undesirable placement may result in inefficient die area usage, lower fmax, and increased wire length.

Accordingly, it may be desirable to provide a compiler flow that supports heterogeneous FPGA architecture, taking advantage of a combination of LUTs and other logic elements (e.g., AICs) to improve resource utilization (e.g., die area, wire length) and improve fmax and compile time.

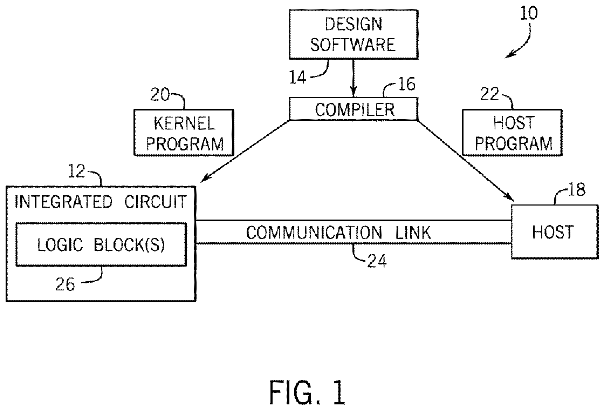

With the foregoing in mind, FIG. 1 illustrates a block diagram of a system 10 that may be used to implement the iterative modular multiplication of this disclosure on an integrated circuit system 12 (e.g., a single monolithic integrated circuit or a multi-die system of integrated circuits). A designer may desire to implement iterative modular multiplication on the integrated circuit system 12 (e.g., a programmable logic device such as a field-programmable gate array (FPGA) or an application-specific integrated circuit (ASIC) that includes programmable logic circuitry). The integrated circuit system 12 may include a single integrated circuit, multiple integrated circuits in a package, or multiple integrated circuits in multiple packages communicating remotely (e.g., via wires or traces). In some cases, the designer may specify a high-level program to be implemented, such as an OPENCL^{®} program that may enable the designer to more efficiently and easily provide programming instructions to configure a set of programmable logic cells for the integrated circuit system 12 without specific knowledge of low-level hardware description languages (e.g., Verilog, very high-speed integrated circuit hardware description language (VHDL)). For example, since OPENCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit system 12.

In a configuration mode of the integrated circuit system 12, a designer may use an electronic device 13 (e.g., a computer) to implement high-level designs (e.g., a system user design) using design software 14, such as a version of INTEL^{®} QUARTUS^{®} by INTEL CORPORATION. The electronic device 13 may use the design software 14 and a compiler 16 to convert the high-level program into a lower-level description (e.g., a configuration program, a bitstream). The compiler 16 may provide machine-readable instructions representative of the high-level program to a host 18 and the integrated circuit system 12. The host 18 may receive a host program 22 that may control or be implemented by the kernel programs 20. To implement the host program 22, the host 18 may communicate instructions from the host program 22 to the integrated circuit system 12 via a communications link 24 that may include, for example, direct memory access (DMA) communications or peripheral component interconnect express (PCIe) communications. In some embodiments, the kernel programs 20 and the host 18 may configure programmable logic blocks 110 on the integrated circuit system 12. The programmable logic blocks 110 may include circuitry and/or other logic elements and may be configurable to implement a variety of functions in combination with digital signal processing (DSP) blocks 120.

The designer may use the design software 14 to generate and/or to specify a low-level program, such as the low-level hardware description languages described above. Further, in some embodiments, the system 10 may be implemented without a separate host program 22. Thus, embodiments described herein are intended to be illustrative and not limiting.

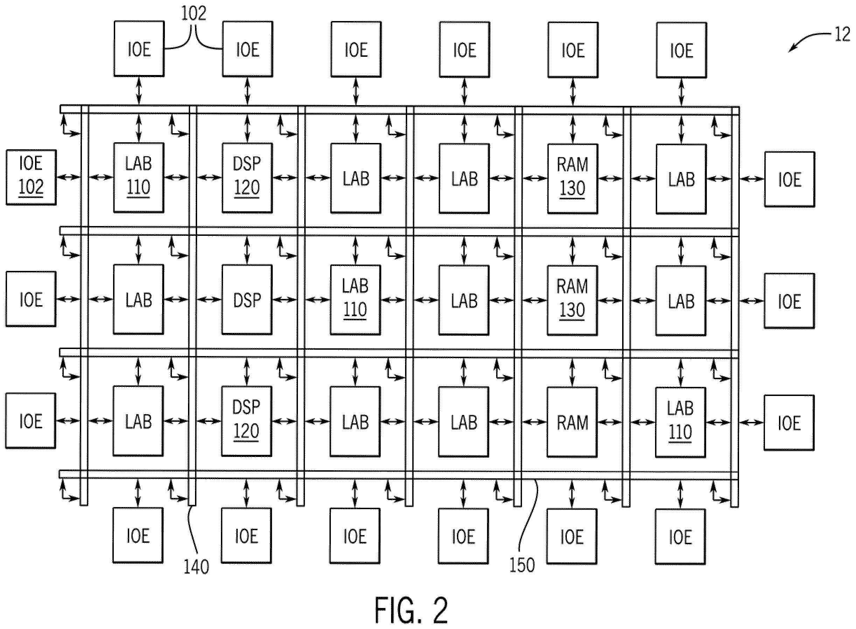

An illustrative embodiment of a programmable integrated circuit system 12 such as a programmable logic device (PLD) that may be configured to implement a circuit design is shown in FIG. 2. As shown in FIG. 2, the integrated circuit system 12 (e.g., a field-programmable gate array integrated circuit) may include a two-dimensional array of functional blocks, including programmable logic blocks 110 (also referred to as logic array blocks (LABs) or configurable logic blocks (CLBs)) and other functional blocks, such as embedded digital signal processing (DSP) blocks 120 and embedded random-access memory (RAM) blocks 130, for example. Functional blocks such as LABs 110 may include smaller programmable regions (e.g., logic elements, configurable logic blocks, or adaptive logic modules) that receive input signals and perform custom functions on the input signals to produce output signals. LABs 110 may also be grouped into larger programmable regions sometimes referred to as logic sectors that are individually managed and configured by corresponding logic sector managers. The grouping of the programmable logic resources on the integrated circuit system 12 into logic sectors, logic array blocks, logic elements, or adaptive logic modules is merely illustrative. In general, the integrated circuit system 12 may include functional logic blocks of any suitable size and type, which may be organized in accordance with any suitable logic resource hierarchy.

Programmable logic the integrated circuit system 12 may contain programmable memory elements. Memory elements may be loaded with configuration data (also called programming data or configuration bitstream) using input-output elements (IOEs) 102. Once loaded, the memory elements each provide a corresponding static control signal that controls the operation of an associated functional block (e.g., LABs 110, DSP 120, RAM 130, or input-output elements 102).

In one scenario, the outputs of the loaded memory elements are applied to the gates of metal-oxide-semiconductor transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), look-up tables, logic arrays, AND, OR, NAND, and NOR logic gates, pass gates, etc.

The memory elements may use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory, configuration random-access memory (CRAM), or programmable memory elements. Programmable logic device (PLD) 100 may be configured to implement a custom circuit design. For example, the configuration RAM may be programmed such that LABs 110, DSP 120, and RAM 130, programmable interconnect circuitry (i.e., vertical channels 140 and horizontal channels 150), and the input-output elements 102 form the circuit design implementation.

In addition, the programmable logic device may have input-output elements (IOEs) 102 for driving signals off the integrated circuit system 12 and for receiving signals from other devices. Input-output elements 102 may include parallel input-output circuitry, serial data transceiver circuitry, differential receiver and transmitter circuitry, or other circuitry used to connect one integrated circuit to another integrated circuit.

The integrated circuit system 12 may also include programmable interconnect circuitry in the form of vertical routing channels 140 (i.e., interconnects formed along a vertical axis of the integrated circuit system 12) and horizontal routing channels 150 (i.e., interconnects formed along a horizontal axis of the integrated circuit system 12), each routing channel including at least one track to route at least one wire. If desired, the interconnect circuitry may include pipeline elements, and the contents stored in these pipeline elements may be accessed during operation. For example, a programming circuit may provide read and write access to a pipeline element.

Note that other routing topologies, besides the topology of the interconnect circuitry depicted in FIG. 1, are intended to be included within the scope of the present invention. For example, the routing topology may include wires that travel diagonally or that travel horizontally and vertically along different parts of their extent as well as wires that are perpendicular to the device plane in the case of three-dimensional integrated circuits, and the driver of a wire may be located at a different point than one end of a wire. The routing topology may include global wires that span substantially all of the integrated circuit system 12, fractional global wires such as wires that span part of the integrated circuit system 12, staggered wires of a particular length, smaller local wires, or any other suitable interconnection resource arrangement.

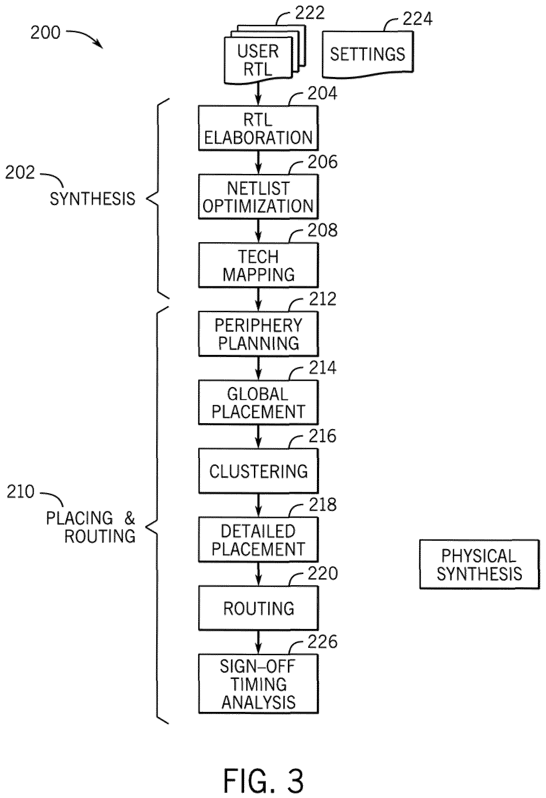

FIG. 3 is an illustration of an FPGA compiler flow 200 that may be used for heterogenous logic architectures, according to embodiments of the present disclosure. In order for the compiler flow 200 to operate properly on an FPGA with heterogeneous logic, at least a portion of the steps of the compiler flow 200 and their associated algorithms and/or circuitry may be adjusted or made aware of the various logic elements that may be used. In particular, at least a portion of the algorithms or circuitry associated with these steps may be made aware of the various types of logic elements (e.g., LUTs, AICs) within what components the logic elements may be implemented, the number of inputs and outputs supported by each logic element, and so on. While AICs will be used to describe the additional logic elements, it should be noted that any appropriate logic element may be used.

The compiler flow 200 may include a synthesis portion 202 that includes a register transfer level (RTL) elaboration block 204, a netlist optimization block 206, and a technology mapping block 208. The compiler flow 200 may include a placing and routing portion 210 that includes a periphery planning block 212, a global placement block 214, a clustering block 216, a detailed placement block 218, and a routing block 220. The compiler flow 200 may begin by receiving a user design file 222 (e.g., an RTL file) and applicable settings 224, and may perform a sign-off timing analysis 226 after the final routing stage in the routing block 220. Each of the blocks and functions in the compiler flow 200 may be performed by the compiler 16, the integrated circuit system 12, or one or more components or algorithms thereof.

In the RTL elaboration block 204, the compiler 16 may convert the user design file 222 to a netlist representation with operators and logic gates. In the netlist optimization block 206, a netlist optimization algorithm may optimize the netlist for area and maximum frequency (fmax). The compiler may infer blocks (e.g., RAM blocks, DSP blocks, carry chain blocks, and so on) that may be mapped efficiently to the FPGA. The netlist optimization algorithm may be made aware of any available logic elements, such as the LUTs and the AICs. Awareness of the various logic elements may affect the inferences of the netlist optimization algorithm. For example, in an architecture with LUTs and AICs, wide decoder logic may not be directly mapped to LUTs because the wide decoder logic may be more efficiently mapped to AICs instead.

In the technology mapping block 208, a technology mapping algorithm may map remaining combinational logic to the logic element primitives that are present in the FPGA. The technology mapping block 208 may map combinational logic to both LUTs and new logic elements (e.g., AICs). A technology mapping algorithm of the technology mapping block may be cut-based, similar to other LUT mapping algorithms. For each node in a netlist, the technology mapping algorithm computes cuts for both LUTs and AICs. Each of these cuts have an associated area cost and delay. In cases where the LUTs are more prevalent in an FPGA, the technology mapping algorithms may favor LUT cuts for functions that can be implemented as both LUTs and AICs. The cuts that can be implemented as AIC may have a lower area and/or delay cost than the cuts that cannot be implemented as AIC. Given these cuts, the technology mapping algorithm may iteratively choose a desired cut for each node to reduce the area consumed and delay. As a result, a mapping may be selected where AICs are only used if implementing AICs will clearly reduce are and delay. LUTs may be used in other areas, with an advantage given to LUTs that may also be mapped to AICs. If a final mapping includes more AICs than may be implemented on the device, a second iteration may be performed via the technology mapping algorithm that changes the cost of the AIC cuts. Additionally or alternatively, a post-processing step may remap some of the AICs to LUTs.

Moving to the placing and routing portion 210 of the compiler flow 200, the periphery planning block 212, which places ports and other periphery elements of the user design 222, may be unaffected by the heterogeneous logic elements. The global placement block 214 may determine approximate locations for core elements of the user design 222. The global placement block 214 (e.g., a global placer algorithm of the global placement block 214) may account for resources available at each location on the FPGA to generally determine placements that may decrease wire length and increase fmax. As will be discussed in greater detail later, before global placement, the netlist includes three categories of logic elements: LUTS that may only be implemented as LUTs (e.g., a 6-input XOR gate); AICs that may only be implemented as an AIC (e.g., an 8-input AND gate); and LUTs that may be implemented as both LUTs and AICs (e.g., a 4-input OR gate). This last category may be referred to herein as an AIC candidate, as it is a LUT that may be selected for implementation as an AIC.

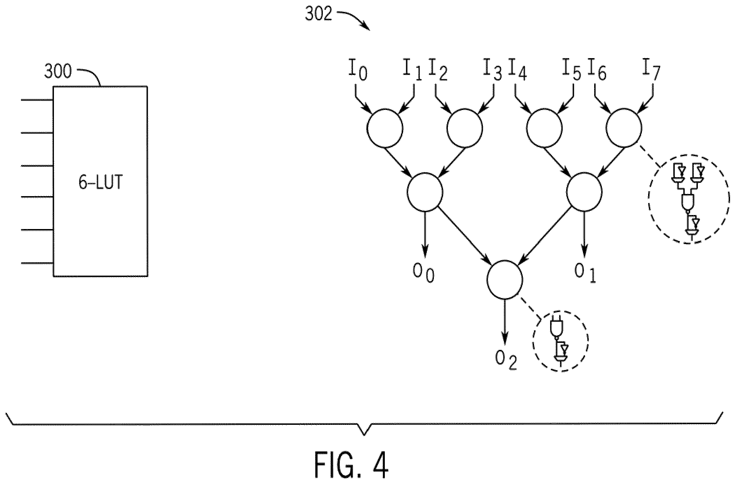

FIG. 4 illustrates two types of logic that may be implemented in a heterogeneous logic architecture as discussed above, according to embodiments of the present disclosure. A heterogeneous architecture may include a 6-input LUT 300 and an 8-input AIC 302. For example, a LAB 110 of an FPGA may include a combination of one or more 6-input LUTs 300 and one or more 8-input AICs 302. The one or more 6-input LUTs 300 may be configured to implement any 6-input function and the one or more 8-input AICs 302 may be configured to implement any 8-input function that can be structured as a con of 2-input AND-gates with optional inverters on the outputs and optional inverters on the inputs of the cone.

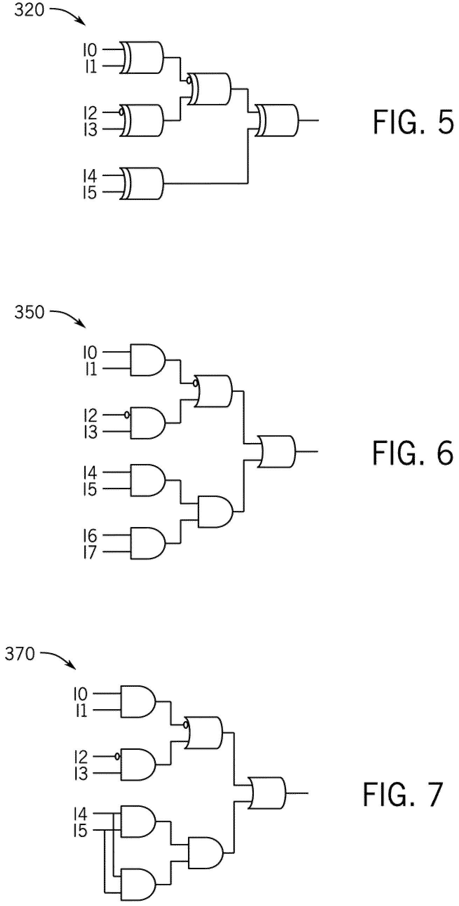

FIG. 5 illustrates LUT logic 320 that may only be implemented as a LUT, according to embodiments of the present disclosure. The LUT logic 320 may be implemented as a 6-input LUT, but may not be implemented as an 8-input AIC, as two-input XOR gates cannot be implemented in one AND gate with inverters. FIG. 6 illustrates AIC logic 350 that may only be implemented as an AIC, according to embodiments of the present disclosure. The AIC logic 350 may be implemented as an 8-input AIC but not a 6-input LUT. The AIC logic 350 fits in an 8-input AIC because it may be mapped to a con with ANDs, inverters, and 8 inputs. The AIC logic 350 does not fit in a 6-input LUT because it has more than 6 inputs. FIG. 7 illustrates candidate AIC logic 370 that can be implemented as either LUT or AIC, according to embodiments of the present disclosure. The logic 370 fits in a 6-input LUT as it has 6 inputs and fits in an 8-input AIC as it can be mapped to a cone with ANDs, inverters, and 8 inputs. To implement as an 8-input AIC, inputs I4 and IS may be replicated. Accordingly, the LUT logic 320 belongs to the first category discussed above (e.g., only LUT), the AIC logic 350 belongs to the second category discussed above (e.g., only AIC), and the AIC candidate logic 370 belongs to the third category discussed above (e.g., logic that may be implemented as an LUT or AIC).

Returning to FIG. 3, before the start of global placement in the global placement block 214 each LUT may be marked with the following information: whether a respective LUT be mapped as an AIC and, if so, how many inputs would this AIC have. Global placer algorithms may be programmed to be aware of the number of LUTs and AICs that may fit in one LAB 110 on the FPGA, as well as any potential AIC logic that may be implemented in a DSP block 120 or RAM block 130. The global placer algorithm may use this information to disperse the netlist across the device to minimize or reduce the over-use or under-use of logic. This may improve clustering in the clustering block 216.

In the clustering block 216, an implementation may be selected for each candidate AIC as either a LUT or an AIC. The clustering algorithm of the clustering block 216 may check the "legality" of implementation and structure. For example, the clustering algorithm may check whether a set of logic elements and registers can fit into a LAB 110 without violating a relevant specification. The clustering algorithm understands that candidate AICs may be implemented as both LUTs and AICs, thus implementing a candidate AIC as an LUT or an AIC may not violate a given specification on its own.

Area-efficient clusters may have a combination of LUT and AIC logic. This allows more logic to be packed into a cluster, which may reduce the number of clusters. The clustering algorithm may favor clusters that have an efficient combination of LUTs and AICs. The clustering algorithm may also account for timing. A delay through an AIC may in some instance be slower than the delay though LUT inputs, which means it may be better to map timing-critical candidates to LUTs instead of AICs. However, logic that is not timing-critical may be mapped to AICs, as in some instances AICs consume less die-area. Clustering also accounts for routability. As the AICs added to the LAB 110 may allow more logic to be implemented into the LAB 110, there may be risk of having too many unique inputs coming into the LAB 110, which may cause routing issues. The clustering algorithm limits the number of inputs into the LAB to ensure efficient routing.

At the end of the clustering block 216, all AIC candidates may be mapped either to a LUT or an AIC. However, the clustering algorithm may continue to track which LUTs and/or AICs are candidates that may be mapped to another logic type. The provides flexibility in how these candidates are mapped.

In the detailed placement block 218, legal locations are found for each LAB 110. In the detailed placement block 218, individual elements are moved around between locations on the chip to get a better placement (in terms of fmax, wire length, wire use, and so on). The detailed placement block 218 may be adapted for the heterogeneous architecture such that it may switch an AIC candidate from a LUT to an AIC or vice versa based on a determination of the placement, routability, or timing. For example, AIC candidates that are not timing-critical may be implemented as AICs, which may free up LUTs for candidates that are more timing critical.

For the purposes of a heterogeneous architecture, the routing block 220 may be made aware of the multiple types of logic elements. For example, for a LUT, the inputs may be freely rotated without making the LUT illegal (although the LUT function may be adjusted). However, for an AIC, it is not always possible to freely rotate inputs.

It may be advantageous to enable user control over some or all of the processes of the compile flow 200. For example, primitives may allow the user to directly instantiate either a LUT or other logic element such as an AIC. Assignments may allow the user to control a percentage of combinational logic that the compiler 16 (e.g., via the technology mapping block 208) maps to each type of logic element. Settings for each step of the compile flow 200 may allow the user to disable mapping to an alternate logic block. Settings to control the amount of effort each step of the compile flow 200 spends on balancing between the different logic blocks. Increasing the effort may increase compile time but may improve resource usage and fmax. User control may include settings which allow the user to group specific AICs and LUTs into the same adaptive logic module (ALM) or LAB 110.

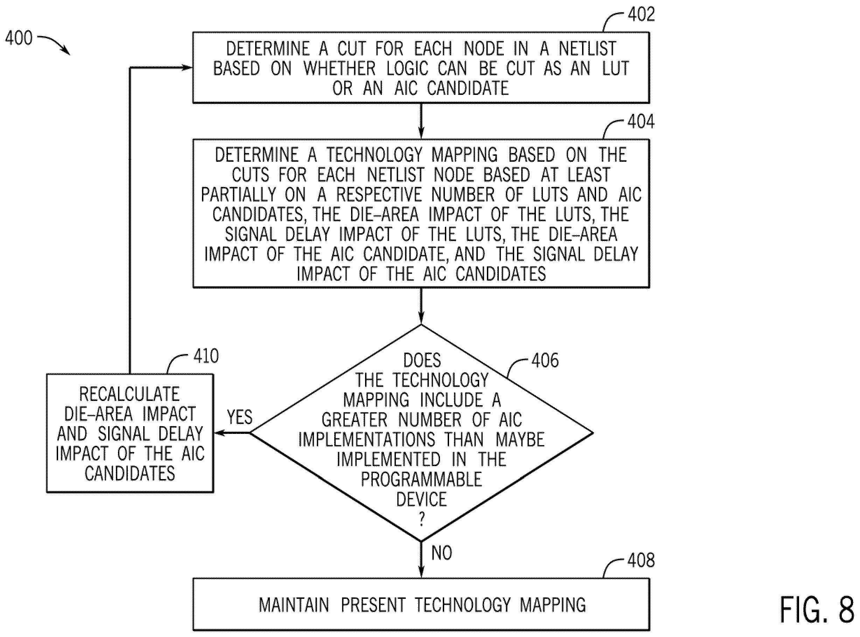

FIG. 8 is a flowchart of an example method 400 for performing the synthesis portion 202 of the compiler flow 200 in a heterogeneous FPGA architecture, according to embodiments of the present disclosure. The method 400 may be performed by the compiler 16, the integrated circuit system 12, or components and/or algorithms thereof. The method 400 includes various steps represented by blocks. Although the flowchart illustrates the steps in a certain sequence, it should be understood that the steps may be performed in any suitable order and certain steps may be carried out simultaneously, where appropriate. Further, certain steps or portions of the method 400 may be performed by separate systems or devices.

The method 400 may be performed by various components and algorithms within the synthesis portion 202 of the compiler flow. As will be described in greater detail below, various steps of the method 400 may be performed in the RTL elaboration block 204, the netlist optimization block 206, and/or the technology mapping block 208. In process block 402, the technology mapping algorithm (discussed with respect to the technology mapping block 208) may, for each node in a netlist, compute cuts for LUTs or AIC candidates. The technology mapping algorithm may compute the cuts based on combinational logic associated with the integrated circuit system 12 (e.g., an FPGA). The technology mapping algorithm may determine whether combinational logic may be cut (e.g., implemented) as an LUT or an AIC candidate.

In process block 404, the technology mapping algorithm may determine a technology mapping based on whether given combinational logic of the FPGA may be implemented as only LUTs and may be implemented as AIC candidates, respective die-area impacts of the LUTs and AIC candidates, and respective signal delay impacts of the LUTs and AIC candidates. In some scenarios, LUTs may consume a greater portion of a die while facilitating lower signal delay and AICs may consume a smaller portion of the die while resulting in a greater signal delay. However, in other scenarios LUTs may have both lower die-area impact and reduced signal delay than AICs given a certain implementation, or vice versa. There may be a desired ratio of LUTs and AIC implementations (e.g., AIC candidates cut into AICs rather than LUTs) based on the die-area consumed by and the signal delay caused by respective implementations of AICs and LUTs.

. That is, in the process block 404, the technology mapping algorithm may determine whether to implement LUTs, AICs, both, or neither into certain functional blocks such as LABs 110, DSPs 120, and RAM 130 based on said determinations. In query block 406, the technology mapping algorithms will determine whether the technology mapping (e.g., the implementations of LUTs, AICs, both, or neither) includes a greater number of AICs than may be implemented in the programmable device (e.g., FPGA). The technology mapping may include a greater number of AICs than may be implemented if the AICs consume a greater die-area than is allowed or desired on a die or consumes more logic than is allowed or desired. There may be a set threshold number of AICs desired by a user. This threshold may be set by user control of the compiler flow 200. If, in the query block 406 it is determined that the present technology mapping does not include a greater number of AICs than may be implemented on the FPGA, in process block 408 the technology mapping algorithm may maintain the present technology mapping. However, if it is determined that the number of AICs is more than may be implemented, in process block 410, the technology mapping algorithm may adjust weighting factors for the AICs and/or LUTs and recalculate die-area impact and signal delay associated with AIC candidates to determine a second technology mapping. The technology mapping algorithm may adjust the weighting factors by applying a greater weight to the die-area impact and a greater weight to the signal delay associated with the AIC candidates or by applying a lesser weight to the die-area impact of the LUTs and a lesser weight to the signal delay associated with the LUTs. The technology mapping algorithm may then restart the method 400 from the process block 402. The technology mapping algorithm may iteratively perform the method 400 until a technology mapping with a desired ratio of LUTs and AICs is mapped.

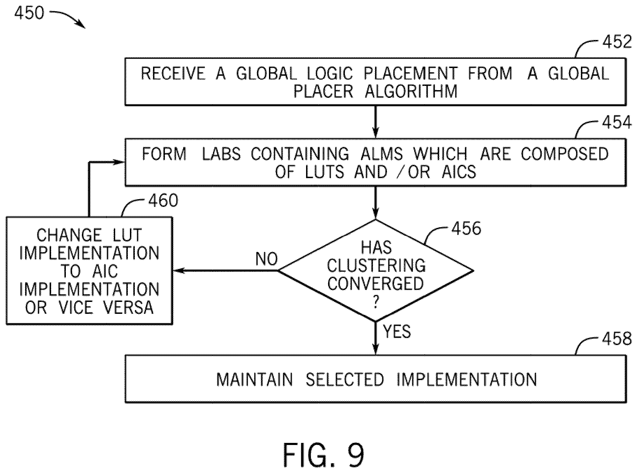

FIG. 9 is a flowchart of an example method 450 for performing the placing and routing portion 210 of the compiler flow 200 in a heterogeneous FPGA architecture, according to embodiments of the present disclosure. The method 450 may be performed by the compiler 16, the integrated circuit system 12, or components and/or algorithms thereof. The method 450 includes various steps represented by blocks. Although the flowchart illustrates the steps in a certain sequence, it should be understood that the steps may be performed in any suitable order and certain steps may be carried out simultaneously, where appropriate. Further, certain steps or portions of the method 450 may be performed by separate systems or devices.

After completing technology mapping, the compiler flow 200 may proceed to the placing and routing portion 210. In the global placement block 214, a global placer algorithm may identify the various LUTs and AIC candidates from the technology mapping block 208 as objects placeable on-die with some constraints associated with the resources available in a given area on the die. For example, there is only so much room available for a given number of LUTs per LAB 110, a given number of AICs per LAB 110, and so on. The global placer algorithm will spread the logic elements across the die while trying to decrease or minimize wire length and space consumed and trying to increase or maximize routability and fmax. However, the determination of whether a logic element such as an AIC candidate is implemented on-die as a LUT or an AIC occurs in the clustering block 216. The clustering block 216 (e.g., via a clustering algorithm) may account for additional legality rules (e.g., input sharing rules) that may arise due to the use of new logic elements such as AICs.

In process block 452, a clustering algorithm may receive global placements from the global placer algorithm as discussed above. In process block 454, based on the global placement presented by the global placer algorithm, the clustering algorithm may form LABs including ALMs, the ALMs composed of LUTs and/or AICs. The clustering algorithm may also determine if there are unused DSPs 120 and/or RAM 130 with logic capable of implementing AICs. If so, the clustering algorithm may leverage the unused logic in the unused DSPs 120 and/or RAM 130 to implement AICs. For example, if the global placer algorithm places four AICs on a LAB 110 that can only handle two AICs, to ensure that the LAB 110 is legal (e.g., doesn't violate any specification) the clustering algorithm may either convert two of the four AICs to LABs, or may implement the two AICs in nearby unused DSPs 120 or RAM 130.

In query block 456, the clustering algorithm may determine whether clustering has converged. Convergence may refer to a state wherein the various logic elements (LUTs, AICs, any other appropriate logic element) is placed in an optimal or desired arrangement via the clustering algorithm. That is, if the clusters have converged there are no illegal placements or implementations within the FPGA, wire length, die-area consumption, and signal delay have been reduced or minimized, routability has been optimized, and fmax has been increased or maximized, among other relevant considerations. If the clustering algorithm determines that the clusters haven o converged, the clustering algorithm may, in process block 460, change LUT implementations to AICs, or vice versa. Switching implementations for the logic elements may reduce or minimize wire length, die-area consumption, and signal delay, enhance routability, and increase or maximize fmax. Once the logic elements have been switched, the method 450 may return to the process block 454 and again reform the LABs 110 and implement AICs in unused DSPs 120 or RAM 130 as discussed above.

If the clustering algorithm determines that the clusters have converged, in process block 510 the clustering algorithm may maintain the selected implementations. That is, the LABs 110 are legal, and the clustering algorithm may no longer change or adjust the LUTs and/or AICs implemented in the LABs 110 or the AICs implemented in the unused DSPs 120 or RAM 130. However, additional changes (e.g., replacement of a LAB 110, changing the content of a LAB 110) may be made in later processes, such as detailed placement, physical synthesis, and so on.

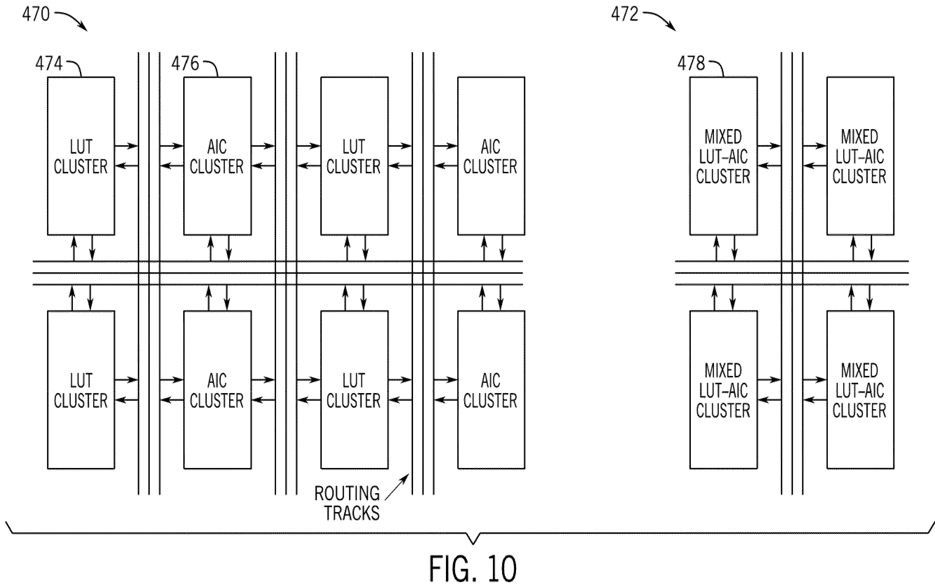

The clustering algorithm may maintain legality for multiple types of cluster architectures. FIG. 10 illustrates a heterogenous cluster architecture 470 and a homogeneous cluster architecture 472, according to embodiments of the present disclosure. The heterogeneous cluster architecture 470 includes LUT clusters 474 and AIC clusters 476. The LUT clusters 474 may only support LUTs and the AIC clusters 476 may only support AICs. That is, to maintain legality, the clustering algorithm will only group LUTs in the LUT clusters 474 and will only group AICs in the AIC clusters 476. However, the homogeneous cluster architecture 472 includes mixed LUT-AIC clusters 478 which may include varying ratios of both LUTs and AICs, for which the clustering algorithm may provide LUTs, AICs, or both. In this manner, the clustering algorithm may maintain legality in various LABs 110 and other cluster architectures.

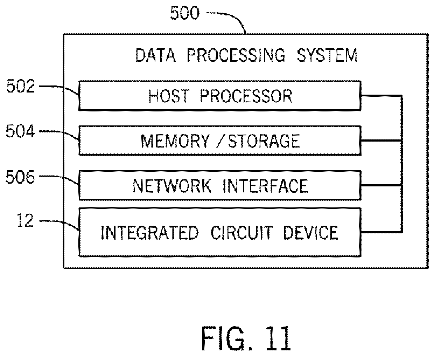

The processes discussed above may be carried out on the integrated circuit system 12, which may be a component included in a data processing system, such as a data processing system 500, shown in FIG. 11. The data processing system 500 may include the integrated circuit system 12 (e.g., a programmable logic device), a host processor 502, memory and/or storage circuitry 504, and a network interface 506. The data processing system 500 may include more or fewer components (e.g., electronic display, user interface structures, application specific integrated circuits (ASICs)). The host processor 502 may include any of the foregoing processors that may manage a data processing request for the data processing system 500 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 504 may include random access memory (RAM), read-only memory (ROM), one or more hard drives, flash memory, or the like. The memory and/or storage circuitry 504 may hold data to be processed by the data processing system 500. In some cases, the memory and/or storage circuitry 504 may also store configuration programs (e.g., bitstreams, mapping function) for programming the integrated circuit system 12. The network interface 506 may allow the data processing system 500 to communicate with other electronic devices. The data processing system 500 may include several different packages or may be contained within a single package on a single package substrate. For example, components of the data processing system 500 may be located on several different packages at one location (e.g., a data center) or multiple locations. For instance, components of the data processing system 500 may be located in separate geographic locations or areas, such as cities, states, or countries.

The data processing system 500 may be part of a data center that processes a variety of different requests. For instance, the data processing system 500 may receive a data processing request via the network interface 506 to perform encryption, decryption, machine learning, video processing, voice recognition, image recognition, data compression, database search ranking, bioinformatics, network security pattern identification, spatial navigation, digital signal processing, or other specialized tasks.

The techniques and methods described herein may be applied with other types of integrated circuit systems. For example, the programmable routing bridge described herein may be used with central processing units (CPUs), graphics cards, hard drives, or other components.

While the embodiments set forth in the present disclosure may be susceptible to various modifications and alternative forms, specific embodiments have been shown by way of example in the drawings and have been described in detail herein. However, the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### EXAMPLE EMBODIMENTS

EXAMPLE EMBODIMENT 1. A computer-implemented method comprising:
   determining a cut for a node of a plurality of nodes of a netlist to determine whether combinational logic associated with the node may be implemented as lookup tables (LUTs), AND-inverter cone (AIC) candidates, or both, wherein a first portion of the AIC candidates are mapped as LUTs and a second portion of the AIC candidates are mapped as AICs; and
   determining a first technology mapping based partially on the cut for the node of the plurality of nodes.
EXAMPLE EMBODIMENT 2. The computer-implemented method of example embodiment 1, comprising:
   determining whether a first number of AICs associated with the second portion of the AIC candidates exceeds a threshold number of AICs; and
   based on determining that the first number of AICs exceeds the threshold number of AICs, determining a second technology mapping.
EXAMPLE EMBODIMENT 3. The computer-implemented method of example embodiment 2, wherein determining the first technology mapping comprises determining a first die area impact of a LUT implementation a second die-area impact of an AIC implementation.
EXAMPLE EMBODIMENT 4. The computer-implemented method of example embodiment 3, wherein determining the second technology mapping comprises adjusting a weighting factor associated with the second die-area impact of the AIC implementation.
EXAMPLE EMBODIMENT 5. The computer-implemented method of example embodiment 2, wherein determining the first technology mapping comprises determining a first signal delay associated with a LUT implementation.
EXAMPLE EMBODIMENT 6. The computer-implemented method of example embodiment 5, wherein determining the first technology mapping for the node of the plurality of nodes of the netlist comprises determining a second signal delay associated with an AIC implementation.
EXAMPLE EMBODIMENT 7. The computer-implemented method of example embodiment 6, wherein determining the second technology mapping comprises adjusting a weighting factor associated with the second signal delay associated with the AIC implementation.
EXAMPLE EMBODIMENT 8. A non-transitory, computer-readable medium comprising computer-readable code, that when executed by one or more processors, causes the one or more processors to:
   receive an indication of global logic placement from a global placer algorithm, wherein logic of the global logic placement includes lookup tables (LUTs) and AND-inverter cones (AICs); and
   form, via a clustering algorithm, a plurality of clusters of logic array blocks (LABs) based on the indication of the global logic placement.
EXAMPLE EMBODIMENT 9. The non-transitory, computer-readable medium of example embodiment 8, comprising the computer-readable code, that when executed by the one or more processors, causes the one or more processors to:
   determine whether the clusters have converged; and
   based on determining whether the clusters have converged, reassign a plurality of LUTs as AICs, reassign a plurality of AICs as LUTs, or both.
EXAMPLE EMBODIMENT 10. The non-transitory, computer-readable medium of example embodiment 8, comprising the computer-readable code, that when executed by the one or more processors, causes the one or more processors to move one or more LABs from a first cluster of the plurality of clusters to a second cluster of the plurality of clusters while maintaining legality of the one or more LABs.
EXAMPLE EMBODIMENT 11. The non-transitory, computer-readable medium of example embodiment 10, comprising the computer-readable code, that when executed by the one or more processors, causes the one or more processors to change logic associated with one or more LABs of a first cluster of the plurality of clusters while maintaining the legality.
EXAMPLE EMBODIMENT 12. The non-transitory, computer-readable medium of example embodiment 8, wherein forming the plurality of clusters of LABs comprises forming a LUT cluster including LUTs and forming an AIC cluster including AICs.
EXAMPLE EMBODIMENT 13. The non-transitory, computer-readable medium of example embodiment 8, wherein forming the plurality of clusters of LABs comprises forming a plurality of mixed LUT-AIC clusters comprising LUTs, AICs, or both.
EXAMPLE EMBODIMENT 14. The non-transitory, computer-readable medium of example embodiment 8, comprising the computer-readable code, that when executed by the one or more processors, causes the one or more processors to identify unused digital signal processing (DSP) blocks and implement AICs in the unused DSP blocks.
EXAMPLE EMBODIMENT 15. The non-transitory, computer-readable medium of example embodiment 8, comprising the computer-readable code, that when executed by the one or more processors, causes the one or more processors to identify unused random-access memory (RAM) and implement AICs in the unused RAM.
EXAMPLE EMBODIMENT 16. A non-transitory, computer-readable medium comprising computer-readable code, that when executed by one or more processors, causes the one or more processors to perform operations comprising:
   determining a cut for a node of a plurality of nodes of a netlist to determine whether logic associated with the node may be implemented as lookup tables (LUTs), AND-inverter cone (AIC) candidates, or both, wherein a first portion of the AIC candidates are mapped, via a technology mapping algorithm, as LUT implementations and a second portion of the AIC candidates are mapped, via the technology mapping algorithms, as AIC implementations; and
   determining, via the technology mapping algorithm, a technology mapping based on the cut for the node of the plurality of nodes.
EXAMPLE EMBODIMENT 17. The non-transitory, computer-readable medium comprising computer-readable code of example embodiment 16, that when executed by the one or more processors, causes the one or more processors to determine whether a first number of AICs associated with the second portion of the AIC candidates exceeds a desired number of AICs.
EXAMPLE EMBODIMENT 18. The non-transitory, computer-readable medium comprising computer-readable code of example embodiment 17, that when executed by the one or more processors, causes the one or more processors to:
   determine that the first number of AICs exceeds the desired number of AICs;
   adjust a first weighting factor associated with the second portion of the AIC candidates; and
   adjust a second weighting factor associated with the second portion of the AIC candidates.
EXAMPLE EMBODIMENT 19. The non-transitory, computer-readable medium comprising computer-readable code of example embodiment 18, wherein the first weighting factor is associated with a die-area impact of the AIC implementations and the second weighting factor is associated with a signal delay impact of the AIC implementations.
EXAMPLE EMBODIMENT 20. The non-transitory, computer-readable medium comprising computer-readable code of example embodiment 19, that when executed by the one or more processors, causes the one or more processors to determine a second technology mapping based on first weighting factor, the second weighting factor, or both.

## Claims

1. A computer-implemented method comprising:
determining a cut for a node of a plurality of nodes of a netlist to determine whether combinational logic associated with the node may be implemented as lookup tables (LUTs), AND-inverter cone (AIC) candidates, or both, wherein a first portion of the AIC candidates are mapped as LUTs and a second portion of the AIC candidates are mapped as AICs; and
determining a first technology mapping based partially on the cut for the node of the plurality of nodes.

2. The computer-implemented method of claim 1, comprising:
determining whether a first number of AICs associated with the second portion of the AIC candidates exceeds a threshold number of AICs; and
based on determining that the first number of AICs exceeds the threshold number of AICs, determining a second technology mapping.

3. The computer-implemented method of claim 2, wherein determining the first technology mapping comprises determining a first die area impact of a LUT implementation a second die-area impact of an AIC implementation.

4. The computer-implemented method of claim 3, wherein determining the second technology mapping comprises adjusting a weighting factor associated with the second die-area impact of the AIC implementation.

5. The computer-implemented method of any of claims 2-4, wherein determining the first technology mapping comprises determining a first signal delay associated with a LUT implementation.

6. The computer-implemented method of claim 5, wherein determining the first technology mapping for the node of the plurality of nodes of the netlist comprises determining a second signal delay associated with an AIC implementation.

7. The computer-implemented method of claim 6, wherein determining the second technology mapping comprises adjusting a weighting factor associated with the second signal delay associated with the AIC implementation.

8. A non-transitory, computer-readable medium comprising computer-readable code, that when executed by one or more processors, causes the one or more processors to:
receive an indication of global logic placement from a global placer algorithm, wherein logic of the global logic placement includes lookup tables (LUTs) and AND-inverter cones (AICs); and
form, via a clustering algorithm, a plurality of clusters of logic array blocks (LABs) based on the indication of the global logic placement.

9. The non-transitory, computer-readable medium of claim 8, comprising the computer-readable code, that when executed by the one or more processors, causes the one or more processors to:
determine whether the clusters have converged; and
based on determining whether the clusters have converged, reassign a plurality of LUTs as AICs, reassign a plurality of AICs as LUTs, or both.

10. The non-transitory, computer-readable medium of claim 8 or 9, comprising the computer-readable code, that when executed by the one or more processors, causes the one or more processors to move one or more LABs from a first cluster of the plurality of clusters to a second cluster of the plurality of clusters while maintaining legality of the one or more LABs.

11. The non-transitory, computer-readable medium of claim 10, comprising the computer-readable code, that when executed by the one or more processors, causes the one or more processors to change logic associated with one or more LABs of a first cluster of the plurality of clusters while maintaining the legality.

12. The non-transitory, computer-readable medium of any of claims 8-11, wherein forming the plurality of clusters of LABs comprises forming a LUT cluster including LUTs and forming an AIC cluster including AICs.

13. The non-transitory, computer-readable medium of any of claims 8-12, wherein forming the plurality of clusters of LABs comprises forming a plurality of mixed LUT-AIC clusters comprising LUTs, AICs, or both.

14. The non-transitory, computer-readable medium of any of claims 8-13, comprising the computer-readable code, that when executed by the one or more processors, causes the one or more processors to identify unused digital signal processing (DSP) blocks and implement AICs in the unused DSP blocks.

15. The non-transitory, computer-readable medium of any of claims 8-14, comprising the computer-readable code, that when executed by the one or more processors, causes the one or more processors to identify unused random-access memory (RAM) and implement AICs in the unused RAM.
